# EUROPEAN PATENT APPLICATION

(11) **EP 0 530 778 A2**
(43) Date of publication of application: **10.03.1993**
(21) Application number: 92115005.8
(22) Date of filing: 02.09.1992
(51) Int. Cl.: F16L 37/14

(54) **Pipe connector**

(30) Priority: 05.09.1991 JP 94916/91
(71) Applicant: Suzuki, Shigeru, Numazu-shi, Shizuoka-ken (JP)
(72) Inventor: Suzuki, Shigeru, Numazu-shi, Shizuoka-ken (JP)
(74) Representative: Glawe, Delfs, Moll & Partner

(57) **Abstract**

The present invention has an object to provide a pipe connector which facilitates the connection and disconnection of a pipe and can whithstand a great internal pressure. An elastic clamp (7) inserted in cut-outs (4) made in the body (1) of the pipe connector is C-shaped and has opposite arcuate legs (7b) of a trapezoidal cross section having a tapered inner surface. With the tapered surface directed toward the open side the clamp (7) is inserted in the cut-outs (4) of the body (1). When the pipe (2) to be jointed is inserted from the open side of the body (1), a projecting flange (8) provided at the forward end thereof comes in contact with the tapered surface and slides there to spread the legs (7b) of the elastic clamp, thus going through the elastic clamp. The elastic clamp then snaps behind contact the back surface of the projecting flange (8) and pinches the outer periphery of the pipe (2). And the outer surface on the forward end of the pipe (2) is pressed to contact an O-ring (5) that has been fitted in a stepped section (3) of the body (1).

## Description

The present invention relates to a pipe connector which is generally usable in the automobile industry and the air-conditioning equipment industry, and more particularly, to a pipe connector suitable for use in air-conditioning equipment for automobiles.

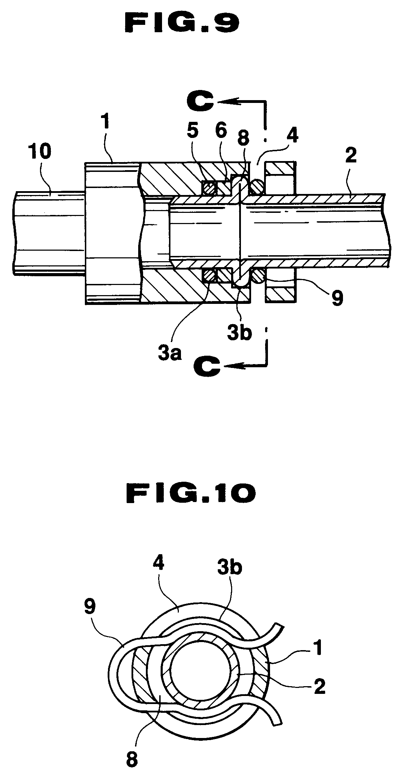

Various kinds of pipe connectors are known in prior art such as a so-called screw-fitting type and push-fitting type, for example a pipe connector disclosed in Laid-Open Japanese Patent Application No. Hei 4-46294, which is of such a design that a pipe having a projecting flange at the forward end is pushed into a connector body and subsequently a clamp is inserted and fixed in a groove provided in the connector body.
The structure of such a prior-art pipe connector will be explained with reference to Figs. 9 and 10. A pipe connector body 1 has shopper insertion grooves or cut-outs 4 in opposite positions near the open end thereof, and a pipe 10 is connected to the other end of the body 1 by welding or by brazing. A pipe 2 connected to the other end of the body 1 is provided with a projecting flange 8 at the forward end. The body 1 has in its inner periphery a small-diameter stepped section 3a for fitting an O-ring 5 and a large-diameter stepped section 3b for fitting in the projecting flange 8 of the pipe 2.
In the small-diameter stepped section 3a are fitted the O-ring 5 and a backup ring 6 for securing this O-ring 5. And then the pipe 2 is inserted into the body 1 from the large-diameter stepped section 3b of the body 1, and after pressing the outer periphery of the forward end into contact with the O-ring 5, an U-shaped elastic stopper 9 is inserted into the stopper insertion grooves 4 until it comes in contact with the neck side surface of the projecting flange 8 of the pipe 2, thereby preventing accidental disconnection of the pipe 2.
However, the U-shaphed elastic stopper 9 is poduced of a metal wire rod having a round or square section and its elastic force is only used for its insertion into the body 1 behind the flange 8 of the pipe 2, but cannot used for the insertion of the pipe 2. The prior-art pipe connector, therefore, has the disadvantage that the U-shaped elastic stopper 9 must be inserted after the insertion of the pipe 2 into the body 1, and if the pipe 2 has not been fully inserted in the body 1, the U-shaped elastic stopper 9 can not be inserted into its correct position. If the U-shaped elastic stopper 7 is fitted in the stopper insertion grooves 4 prior to the insertion of the pipe 2 into the body 1 it will either fall off when shaken during the connecting operation, or it will interfere with the projecting flange 8 and make it impossible to insert the pipe 2 into the body 1. It is therefore necessary to handle the U-shaped elastic stopper 9 and the body 1 separately, and therefore the pipe connecting operation requires two steps: the insertion of the pipe 2 and then the insertion of the U-shaped elastic stopper 7. In the practical use of the pipe connector, the direction of insertion of the U-shaped elastic stopper 9 varies up or down, or right or left, in accordance with a position where pipe connection is made. Therefore, in such a narrow space as an engine compartment of an automobile, it will become a very difficult work to insert and remove the U-shaped elastic stopper 9.

The present invention has been accomplished in an attempt to obviate the disadvantages mentioned above, and has as its object the provision of a pipe connector which facilitates the insertion and removal of a pipe and is capable of withstanding a high internal pressure.
In the pipe connector of the present invention, the elastic clamp or stopper to be inserted in the clamp insertion cut-outs formed in the connector body has an incomplete annular shape or C-shape and presents opposite arcuate legs of a trapezoidal section each having a tapered inner surface. The elastic clamp is inserted into the clamp insertion cut-outs of the connector body with the aforementioned tapered surface directed toward the opening of the body before the pipe is inserted into the body. When the pipe to be connected is inserted into the opening side of the body, the projecting flange provided on the forward end section hits against the tapered surface, sliding there to spread the leags of the elastic clamp. Therefore, this inserting operation alone allows the projecting flange of the pipe to go through the elastic clamp. Hence the elastic clamp comes in contact with the back side of the projecting flange and presses against the outer periphery of the pipe. At the same time, the outer periphery at the forwad end of the projecting flange is pressed into contact with the O-ring fitted in the stepped section of the body.

The present invention and its features and advantages will be set forth and become more apparent in the detailed description of the preferred embodiment presented below when read with reference to the accompanying drawings, in which:
Fig. 1 is a longitudinal sectional view of one embodiment of a pipe connector according to the present invention;
Fig. 2 is a sectional view taken along line A-A of Fig. 1;
Fig. 3 is a front view of an elastic clamp of the present invention;
Fig. 3a is a sectional view taken along line B-B of Fig. 3;
Fig. 4 is a prospective view of the principal elements of the pipe connector;
Fig. 5 is a front view, partly broken, of a pipe to be inserted and jointed;
Fig. 6 is a longitudinal sectional view of another embodiment of the pipe connector according to the present invention;
Fig. 7 is a sectional view of an embodiment of the pipe connector so formed as to allow easy engagement of the elastic clamp in the cut-outs of a connector body;
Fig. 8 is a sectional view of an embodiment of the pipe connector using an elastic clamp provided with a retaining projections on the forward end of its arcuate legs;
Fig. 9 is a longitudinal sectional view of a prior-art pipe connector; and
Fig. 10 is a sectional view taken along line C-C of Fig. 9.

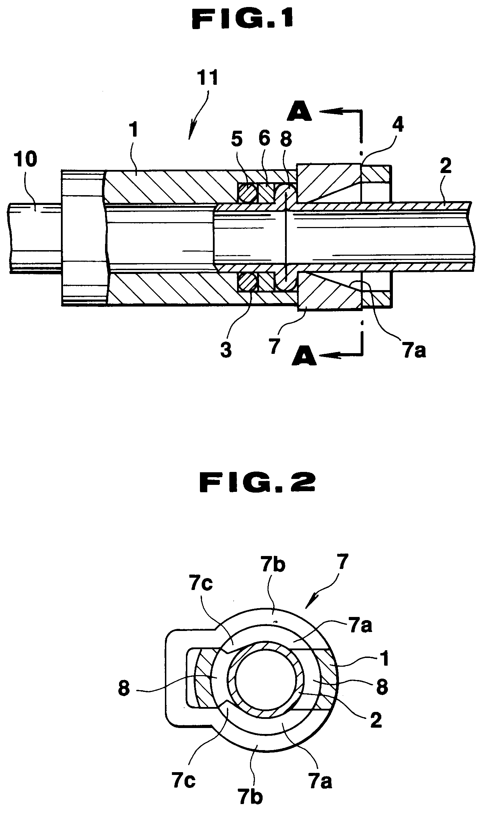

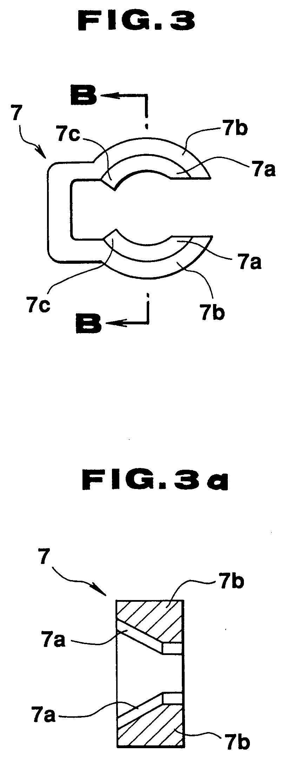

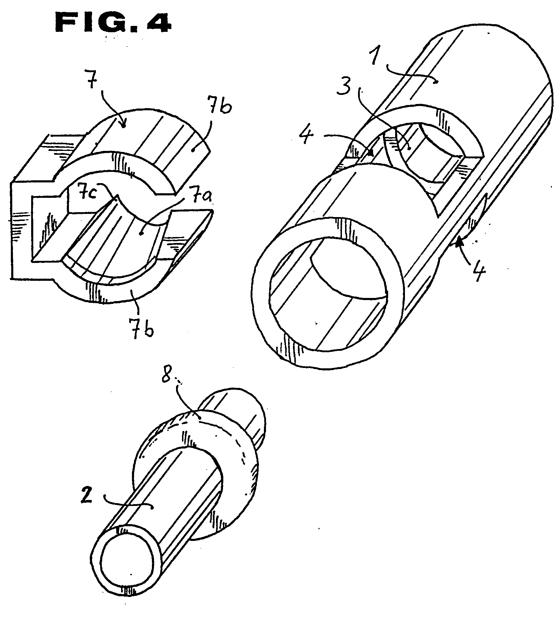

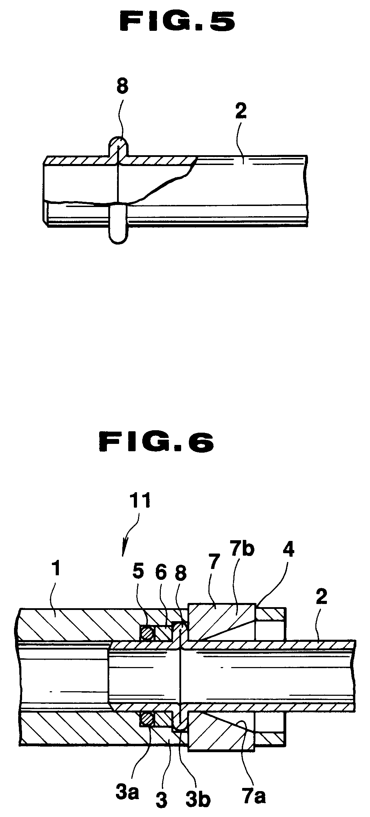

The elastic stopper of the pipe connector of the present invention is made in an open annular form or C-form and has opposite arcuate legs of a trapezoidal cross section having a tapered inner inside. The elastic clamp is inserted in the cut-outs grooves of the connector body with the tapered surface directed to the opening side of the body prior to the insertion of the pipe; into the body. When the pipe is inserted into the body from the open side thereof, the projecting flange formed at the forward end contacts the tapered surface of the clamp and slides thereon to spread the legs of the elastic clamp. Therefore the projecting flange of the pipe can be installed through the elastic stopper by the inserting operation. The elastic stopper snaps behind the near surface of the projecting flange to prevent accidental disconnection of the pipe and presses against the outer periphery of the pipe, whereby this is pinched and fastened. In this state the outer periphery of the pipe of the forward end side of the projecting flange contacts the O-ring fitted in the stepped section of the connector body thus providing an airtight joint.
There exists some clearance between the cut-out and the elastic clamp, and therefore even if the pipe is slightly deviated in the axial direction because of the application of an internal pressure to the pipe after pipe connection, the state of contact between the outer periphery of the pipe end and the O-ring will not vary. The elastic clamp or stopper can withstand a great pressure without being affected by the sealing effect of the O-ring.
On the other hand, in the case of removal of the pipe, the pipe can easily be disconnected simply by pulling off the elastic clamp.
Hereinafter one embodiment of the pipe connector according to the present invention will be explained with reference to Figs. 1, 2 and 4. A pipe connector 11 of the present embodiment is composed of a connector body 1, an elastic clamp 7 installed on this body 1, an O-ring 5, and a backup ring 6. The body 1 of the pipe connector 11 is of a cylindrical form, an cuter peripheral wall at its one end being provided with insertion cut-outs 4 cut in the opposite positions of the wall. Furthermore, in the inner periphery of the body 1 is provided a stepped section 3 which is formed by widening the inner diameter thereof. Fitted in this stepped section 3 is the O-ring 5 which is pressed to seal airtight in contact with the outer periphery of the forward end section of the pipe 2 inserted into the body 1 described later. And behind that is fixed the O-ring 5 to the body 1 by fitting a backup ring 6. The connector is so designed and made that there is formed, between the backup ring 6 and the insertion cut-outs 4, a clearance corresponding to the thickness of the projecting flange 8 provided at the forward end section of the pipe. In this case, pressing the O-ring 5 firmly into the stepped section 3 can dispense with the backup ring 6. On the other end of the body 1 is connected a pipe 10 by welding or brazing.
In the cut-outs 4 of the body 1 the elastic clamp 7 should be removable inserted before the pipe 2 is inserted into the body 1. This elastic clamp 7 is produced of plastics or metal and its elastic force works in inward and outward directions. As clearly shown in Figs. 3 and 4, the elastic clamp 7 has generally a C-shape. This elastic clamp 7 has, in opposite positions, arcuate legs 7b of a trapezoidal cross section having a tapered inner surface 7a. Furthermore, the arcuate leg 7b is provided, as part of the tapered surface 7a near the connection of the legs, with a stopper portion 7c which engages with the body 1. This elastic clamp 7 is inserted into the cut-outs 4 prior to pipe insertion with the tapered surface 7a directed to the opening in one end side of the body 1, and is fitted by its resilience on the body 1.
The pipe 2 to be inserted in the body 1 has at the forward end the projecting flange 8 as shown in Fig. 5. When this pipe 2 is inserted into the body 1 from one open end thereof the flange 8 contacts the tapered surface 7a of the elastic clamp 8, and when the pipe 2 is further pushed in, the projecting flange 8 slides on the tapered surface 7a, spreading the elastic clamp 7 until it passes through the clamp 7. Then the elastic clamp 7 recovers its original state with its inner diameter decreasing. Therefore the projecting flange 8 is positioned into the clearance between the inner side surface of the elastic clamp 7 and the backup ring 6. Consequently the elastic clamp 7 functions as a stopper to retain the pipe 2 and to pinch the outer periphery of the pipe 2 with its resilience, thereby fastening the pipe 2.

During the connecting operation the pipe 2 is in airtight contact with the O-ring 5 at the stepped section 3 already before the flange 8 has passed through the elastic clamp 7 and is positioned in between the clamp 7 and the backup ring 6; thus outer periphery of the forward end section of the pipe 2 is thoroughly sealed airtight by means of the O-ring 5 installed between the pipe 2 and the body 1.
Fig. 6 shows another embodiment of the pipe connector 11 according to the invention. In this embodiment, the stepped section 3 is formed of two steps including a small-diameter stepped sections 3a located inside and a large-diameter stepped section 3b located nearer to the opening on one end side of the body 1. In the small-diameter stepped section 3a are fitted the O-ring 5 and the backup ring 6, and in the large-diameter stepped section 3b is inserted the projecting flange 8 of the pipe 2; in this case the inner wall of the large-diameter stepped section 3b serves as a stop where the projecting flange 8 is positioned. According to tis embodiment, the pipe connector has the advantage that it is possible to use a thin O-ring which is smaller in outer diameter than the projecting flange 8, though the wall thickness of the body 1 must be increased.

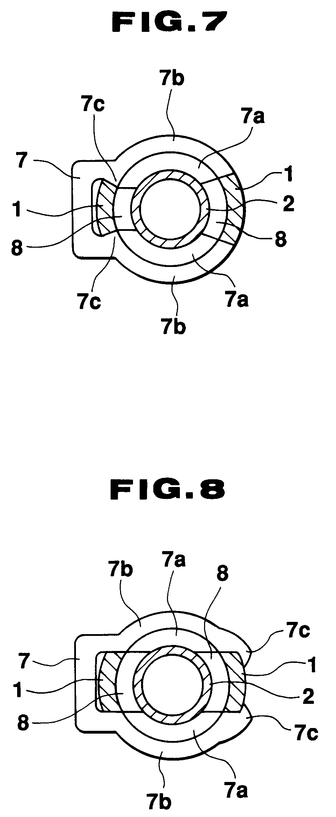

Fig. 7 shows further embodiment of the pipe connector 11 according to the invention. In the above-described embodiment of Fig. 3, the stopper portion 7c of the elastic clamp 7 is formed in a part of the tapered surface 7a of the arcuate legs 7b; in the present embodiment, however, the stopper portion 7c is formed projecting inwardly form the part joining the arcuate legs 7b. The cut-outs of the body 1 receiving the elastic clamp 7 are so formed as to tapes toward the axis from the side where the elastic clamp 7 is inserted, thereby facilitating the engagement of the stopper portion 7c of the elastic clamp 7 with the body 1.

Fig. 8 shows a further embodiment of the pipe connector 11 according to the invention. In this case, the stopper portion 7c of the elastic clamp 7 is formed as retaining projection to project inward at the forward end of each arcuate leg 7b and engaging with the outer side of the body 1 opposite the side from which the elastic clamp 7 is inserted.
In the above-described emobidements, a pipe connection on one end only of the connector body has been described, but it should be noted that the present invention is not limited thereto and pipe connectors of similar structure may be provided on both ends of the body, and furthermore that the body may be made in a T-shape or cross shape with two or three or four ends provided with pipe connectors of similar structure.
By using the pipe connector according to the invention pipes can easily be quick-fitted and disconnected without using a spanner or other turning or tightening tools. Moreover, it is possible to easily connect and disconnect pipes regardless of the direction of insertion of the elastic stopper even in such a narrow place as the engine compartment of an automobile where pipe connection and disconnection is often a hard word, thereby largely improving work efficiency.
In addition it is possible to reduce production cost because of simple construction. Since it withstands a great internal pressure exerted to the interior of the connector body after connection, the pipe connector is fully usable not only for piping of air-conditioning equipment but for various other purposes.
The present invention has been described in detail with particular reference to preferred embodiments thereof but it will be understood that variations and modifications can be effected within the spirit and scope of the invention.

## Claims

1. A pipe connector for connecting a pipe (2) provided with a projecting flange (8) at a forward end section, said pipe connector comprising:
a substantially tubular body (1) having clamp insertion cut-outs (4) provided at opposite positions in the tubular wall and a step (3) provided at the inner periphery;
an O-ring (5) fitted in said body (1) against said step (3); and
an elastic clamp (7) of substantially C-shape, provided at opposite positions with arcuate legs (7b) of trapezoidal cross section having a tapered inner surface (7a), and inserted in said clamp insertion cut-outs (4) of said body (1) with said tapered surface directed to the tube receiving end side of said body (1),
whereby said projection flange (8) when sliding on said tapered surface upon the insertion of said pipe (2) into the body (1) spreads said arcuate legs (7b) of the elastic clamp (7) until said projecting flange passes through said elastic clamp (7), and said elastic clamp (7) snaps behind said projecting flange (8).

2. A pipe connector as claimed in claim 1, wherein said elastic clamp (7) has, in a part of said arcuate legs, a stopper portion (7c) which is directed inwardly, engaging with said body.

3. A pipe connector as claimed in claim 1, wherein said stepped section (3) includes a small-diameter stepped section (3a) and a large-diameter stepped section (3b), and said O-ring (5) is fitted in said small-diameter stepped section (3a), and the flange (8) of said pipe (2) is disposed in the large-diameter stepped section (3b).

4. A pipe connector as claimed in claim 2, wherein said stopper portion (7c) of said elastic clamp 7 is formed in a part of said tapered surface on the connection side of said arcuate legs (7b).

5. A pipe connector as claimed in claim 2, wherein said stopper portion (7c) of said elastic clamp is formed on the connecting portion of said arcuate legs (7b), and a part of said body (1) engaged by the stopper portion (7b) is so formed as to become narrower towards the axis.

6. A pipe connector as claimed in claim 2, wherein said stopper portion (7c) of said elastic clamp (7) is formed on the forward end of said arcuate legs and engages with the outer side of said body (1).
